# DEMANDE DE BREVET EUROPEEN

(11) **EP 1 065 411 A1**
(43) Date de publication de la demande: **03.01.2001**
(21) Numéro de dépôt: 00420138.0
(22) Date de dépôt: 26.06.2000
(51) Int. Cl.: F16H 57/05

(54) **Pignon de chaîne, ensemble de transmission de puissance et moteur équipés d'un tel pignon**

(30) Priorité: 28.06.1999 FR 9908430
(71) Demandeur: Sachs Automotive France SA, 38870 Saint Simeon de Bressieux (FR)
(72) Inventeur: Husson, Michel, 38260 Saint Hilaire de la Cote (FR)
(74) Mandataire: Myon, Gérard Jean-Pierre

(57) **Abrégé**

Pignon (1) d'entraînement ou de renvoi de chaîne (20), notamment pour la transmission de puissance dans un moteur, comprenant une denture périphérique (10) apte à coopérer avec les maillons de la chaîne et au moins un canal ou une ouverture radial (6) reliant une cavité (7) du pignon formant répartiteur de fluide de lubrification avec une partie (12) de la denture (10) au voisinage de la chaîne (20), caractérisé en ce qu'il comprend un corps principal (2) solidaire d'un arbre central (4) et un corps secondaire (3) monté sur le corps principal (2), le ou les canaux ou ouvertures (6) étant formés entre ces corps (2, 3).

## Description

L'invention a trait à un pignon d'entraînement ou de renvoi de chaîne, à un ensemble de transmission de puissance comprenant un tel pignon et a un moteur équipé d'un tel pignon.

Il est connu d'utiliser une chaîne formée de maillons pour la transmission de puissance et, notamment, pour l'entraînement d'un arbre à cames en synchronisme d'un vilebrequin dans un moteur à combustion interne. Les pignons connus comprennent généralement une denture ménagée à la périphérie d'un corps monobloc, la géométrie de la denture étant adaptée à celle de la chaîne à entraîner.

Pour éviter un grippage de la chaîne, il est connu de la faire barboter dans un bain d'huile, de telle sorte que l'huile pénètre entre les pièces de la chaîne en mouvement relatif, notamment entre les rouleaux, les douilles et les axes d'articulation de la chaîne. Cependant, les huiles modernes sont de plus en plus fluides et n'ont pas tendance à rester dans les interstices créés entre les pièces en mouvement relatif, d'où un risque de rupture du film d'huile entre ces pièces. Dans certaines applications, on peut prévoir que des pipettes alimentées en huile sous pression soient dirigées vers la chaîne en cours de défilement, mais ceci nécessite la mise en place précise de ces pipettes et la lubrification obtenue n'est pas optimale dans la mesure où il existe un mouvement relatif rapide entre la chaîne et la pipette dans la zone d'impact de l'huile sur la chaîne.

Il est également connu de JP-A-11 132315 de réaliser un pignon dont les faces latérales sont pourvues de rainures rayonnantes d'écoulement d'huile de lubrification. Dès que cesse l'alimentation en huile du pignon, la chaîne n'est plus lubrifié sur sa denture, d'où un risque de grippage lors des arrêts d'un moteur équipé d'un tel pignon.

C'est à ces inconvénients qu'entend plus particulièrement remédier l'invention en proposant un pignon prévu pour coopérer avec une chaîne qui permet également d'améliorer la lubrification de cette chaîne sans avoir recours à une pipette de projection d'huile sur cette chaîne ou à un barbotage de la chaîne alors que la lubrification demeure efficace jusqu'à l'arrêt du pignon.

Dans cet esprit, l'invention concerne un pignon d'entraînement ou de renvoi de chaîne, notamment pour la transmission de puissance dans un moteur, comprenant une denture périphérique apte à coopérer avec les maillons de la chaîne et au moins un canal ou une ouverture radial reliant une cavité du pignon formant répartiteur de fluide de lubrification avec une partie de la denture, au voisinage de la chaîne. Ce pignon est caractérisé en ce qu'il comprend un corps principal solidaire d'un arbre central et un corps secondaire monté sur le corps principal, le ou les canaux ou ouvertures étant formés entre ces corps.

Grâce à l'invention, les canaux ou ouvertures radiaux permettent de distribuer un fluide de lubrification tel qu'une huile, jusqu'au voisinage immédiat de la chaîne, alors que celle-ci se déplace à la même vitesse que la denture. Ainsi, le lubrifiant débouchant de chacun des canaux impacte la chaîne avec une orientation prédéterminée qui peut être mise à profit pour obtenir une lubrification efficace. Compte tenu de l'orientation radiale des canaux, la force centrifuge générée par la rotation du pignon est utilisée pour conférer au fluide de lubrification une énergie cinétique telle qu'il pénètre efficacement dans les interstices de la chaîne. De plus, les canaux radiaux permettent de créer, au niveau de la denture du pignon, un coussin d'huile de lubrification, notamment en fond de denture, ce qui permet d'amortir les chocs au niveau des zones de contacts entre la chaîne et le pignon. On obtient d'une part, des sollicitations moindres de la chaîne et du pignon et, d'autre part, une réduction du bruit de fonctionnement d'un système d'entraînement incorporant un tel pignon. Ce coussin d'huile créé au niveau de la denture permet également de réduire l'effet de succion ou de ventouse qui se produit classiquement en fond de denture sur les pignons connus. Le fait que le pignon comprend un corps principal et un corps secondaire permet de constituer, au moyen de games d'usinage relativement simples, un volume concave formant la cavité d'alimentation des canaux et constituant une sorte de réservoir, ce qui permet le maintient de la lubrification, même si cette cavité n'est plus alimentée, par exemple lors d'une phase transitoire d'arrêt d'un moteur.

Selon des aspects avantageux et non obligatoires de l'invention, le pignon incorpore une ou plusieurs des caractéristiques suivantes :
- Le canal débouche dans la denture au fond d'un espace de réception d'une articulation de la chaîne, par exemple au fond d'un espace entre deux dents de la denture. Dans ce cas, le canal débouche en regard d'un axe, d'une douille et éventuellement d'un rouleau, de la chaîne, le fluide de lubrification s'écoulant autour de ces éléments de la chaîne qu'il permet de lubrifier efficacement. On peut prévoir que le débouché du canal est apte à être disposé en regard d'un orifice de passage d'un lubrifiant ménagé dans un rouleau ou dans une douille de la chaîne. Dans ce cas, le ou les canaux radiaux permettent d'alimenter en fluide de lubrification des orifices de répartition de lubrifiant dans les éléments d'articulation des plaquettes de la chaîne, d'où une lubrification directe qui peut être effectuée sous une pression qui est fonction de la vitesse de rotation du pignon. On peut également prévoir que le débouché des canaux radiaux est prévu dans une partie centrale de la surface de portée de la chaîne dans la denture.
- Le corps principal est pourvu de rainures radiales formant les canaux ou ouvertures alors que ces rainures sont coiffées par le corps secondaire. Les canaux ou ouvertures ont donc une section définie à la fois par le corps secondaire et le corps principal. Dans ce cas, on peut prévoir que le corps principal forme une surface radiale de répartition de fluide de lubrification, cette surface étant bordée par une ceinture circonférientielle formant une partie de la denture, alors que cette ceinture est interrompue par les rainures au niveau du fond de certains au moins des espaces de réception d'une articulation de la chaîne.
- La cavité formant répartiteur de fluide de lubrification est définie entre le corps principal et le corps secondaire. Selon un autre aspect avantageux de l'invention la cavité formant répartiteur a un volume interne sensiblement supérieur à celui du canal ou des canaux. Grâce à ces aspects de l'invention, la cavité joue le rôle d'un réservoir d'alimentation des canaux ou ouvertures, ce réservoir étant lui-même alimenté grâce à une tubulure reliée à une pompe de circulation de l'huile de lubrification. En cas d'arrêt du moteur, cette pompe peut être immédiatement arrêtée alors que la chaîne continue à tourner du fait de l'inertie du moteur, auquel cas l'huile lubrifiante présente dans cette cavité continue à être acheminée vers la chaîne en assurant ainsi la fonction de lubrification jusqu'à l'arrêt complet du pignon.

L'invention concerne également un ensemble de transmission de puissance, notamment pour un moteur, qui comprend un pignon tel que précédemment décrit et une chaîne dont les maillons sont articulés au moyen d'axes entourés par des douilles elles-mêmes entourées par des rouleaux, ces douilles et ces rouleaux étant pourvus chacun d'au moins un orifice radial de passage de fluide de lubrification alors que ces orifices sont aptes à être orientés vers le débouché des canaux ou ouvertures lorsque ces douilles et rouleaux sont en place sur le pignon. Cet ensemble permet donc un gavage des interstices pouvant exister entre les douilles et les axes d'articulation ou entre les douilles et les rouleaux. Avantageusement, les orifices radiaux d'une douille et d'un rouleau coaxiaux autour d'un axe d'articulation de deux maillons de la chaîne peuvent être alignés en même temps selon une direction essentiellement radiale du pignon. Ceci permet leur alimentation grâce à l'écoulement essentiellement radial à travers un canal ou une ouverture du pignon.

L'invention concerne enfin un moteur, notamment un moteur à combustion interne, équipé d'un pignon ou d'un ensemble tels que précédemment décrits. Un tel moteur fonctionne efficacement avec une durée de vie sensiblement améliorée par rapport aux moteurs connus grâce à la longévité accrue du pignon et de la chaîne de transmission associée.

L'invention sera mieux comprise et d'autres avantages de celle-ci apparaîtront plus clairement à la lumière de la description qui va suivre de deux modes de réalisation d'un pignon conforme à son principe, donnée uniquement à titre d'exemple et faite en référence aux dessins annexés dans lesquels :
- la figure 1 est une vue de face d'un pignon conforme à l'invention équipé d'une chaîne ;
- la figure 2 est une vue à plus grande échelle du détail II à la figure 1 ;
- la figure 3 est une vue partielle en perspective éclatée de maillons de la chaîne utilisée avec le pignon de la figure 1 ;
- la figure 4 est une coupe selon la ligne IV-IV à la figure 1 ;
- la figure 5 est une coupe analogue à la figure 4 pour un pignon conforme à un second mode de réalisation de l'invention ;
- la figure 6 est une vue en perspective éclatée du pignon de la figure 5 et
- la figure 7 est une vue à plus grande échelle du détail VII à la figure 6.

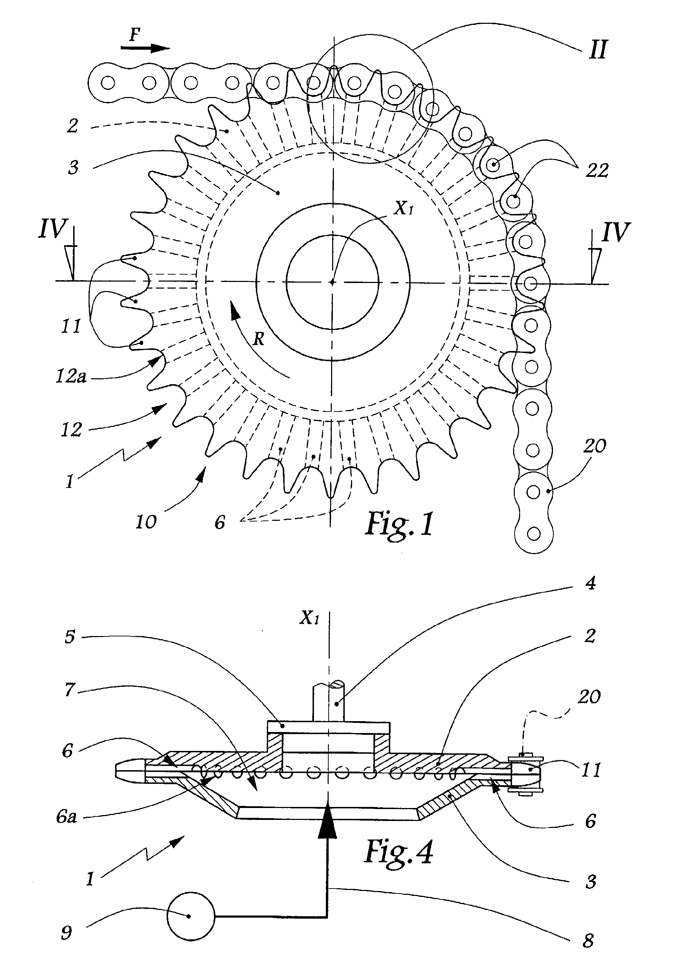

Le pignon 1 représenté à la figure 1 comprend un corps principal 2 centré sur un axe X₁ et une flasque ou corps secondaire 3 monté sur le corps principal 2 par tout moyen approprié, et notamment par clinchage, soudage, vissage ou rivetage. Le corps 2 est solidaire d'un arbre d'entraînement 4 au moyen d'une bride 5. L'arbre 4 permet d'imprimer au pignon 1 un mouvement de rotation R.

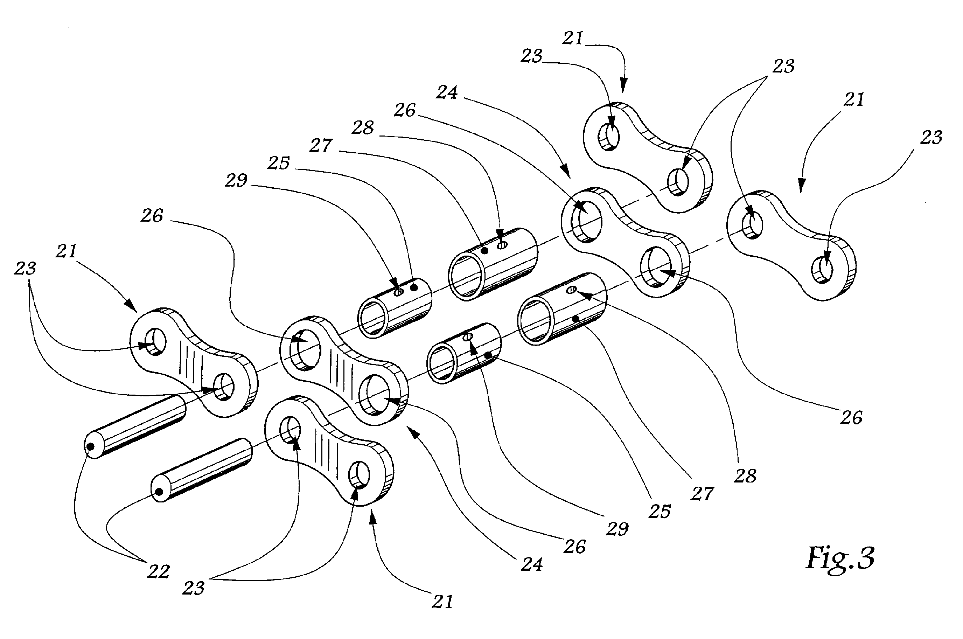

A sa périphérie, le pignon 1 est pourvu d'une denture 10 formée de dents 11 et d'espaces inter-dents 12. Cette denture 10 est destinée à coopérer avec une chaîne 20 formée de maillons dont la structure est plus particulièrement visible à la figure 3. Des plaquettes extérieures 21 sont reliées par des axes 22 qui sont immobilisés dans des perçages 23 des plaquettes 21. Les éléments 21 et 22 constituent les maillons extérieurs de la chaîne. Par ailleurs, des plaquettes intérieures 24 sont reliées par des douilles 25 qui sont immobilisées dans des perçages 26 ménagés dans des plaquettes 24. Les éléments 24 et 25 constituent les maillons intérieurs de la chaîne. Des rouleaux 27 sont disposés autour des douilles 25 qui sont elle-mêmes disposées autour des axes 22. Chaque rouleau 27 est pourvu d'un orifice radial 28 de passage d'une huile de lubrification, alors que chaque douille 25 est pourvue d'un orifice radial 29 de passage d'huile. Les orifices 29 ont une orientation pré-déterminée par rapport à la direction F d'avance de la chaîne, car les douilles 25 sont fixes par rapport aux plaquettes 24. En revanche, les rouleaux 27 peuvent tourner librement autour des douilles 26, de telle sorte que l'orientation des orifices 28 est variable autour des axes 22.

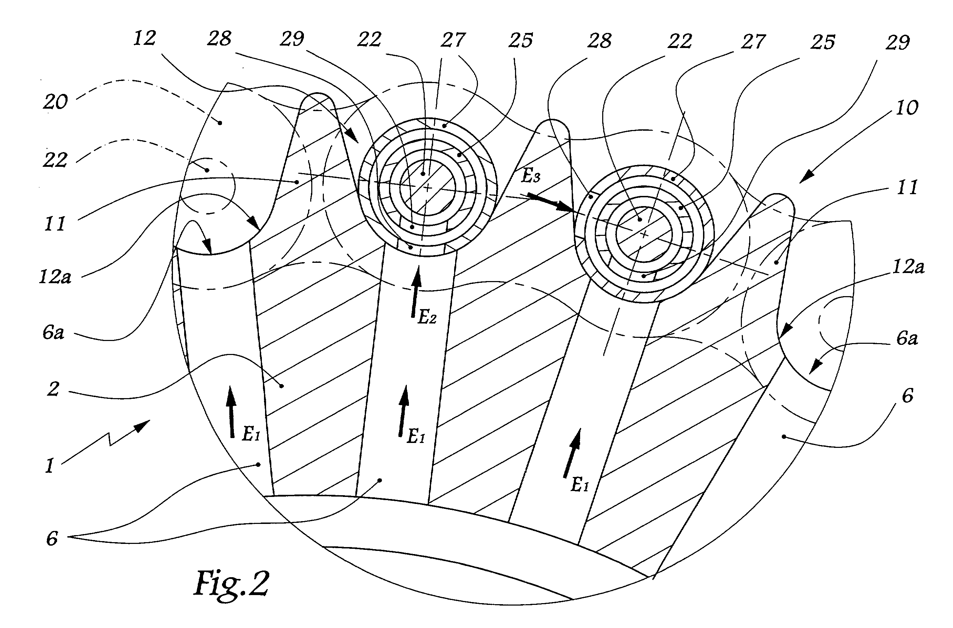

Conformément à l'invention, le pignon 1 comprend des canaux radiaux 6 régulièrement répartis autour de l'axe X₁ et qui s'étendent entre une cavité 7, définie entre les corps 2 et 3, et chacun des espaces 12. Plus précisément, le débouché 6a de chaque canal 6 au niveau d'un espace 12 est formé dans le fond 12a de cet espace, c'est-à-dire dans la zone d'appui de la chaîne 20 sur la denture 10, sensiblement au centre de la surface de portée formée par ce fond, c'est-à-dire à égale distance des plaquettes 24. Comme il ressort plus clairement de la figure 2, un écoulement E₁ de fluide de lubrification a lieu à l'intérieur des canaux 6, en direction des axes, douilles et rouleaux de la chaîne 10.

Les orifices 29 sont en permanence orientés vers le débouché 6a des canaux 6 alors que, compte tenu de la libre rotation des rouleaux 27 autour des douilles 25, les orifices 28 peuvent être orientés indifféremment autour des axes 22.

En considérant un pignon tournant à une vitesse de 1 000 tours/minute, il s'avère qu'un orifice 28 est disposé approximativement en direction du débouché 6a d'un canal 6 une fois sur quatre, de telle sorte que la configuration visible dans la partie centrale de la figure 2 peut être obtenue dans un cas sur quatre. Dans cette configuration, l'écoulement E₂ d'huile de lubrification permet de remplir directement les espaces interstitiels qui existent entre l'axe 22 et la douille 25 d'une part, et entre la douille 25 et le rouleau 27 d'autre part, ce qui permet une lubrification efficace de l'articulation de la chaîne 10. Dans la configuration représentée sur la droite de la figure 2, les orifices 28 et 29 ne sont pas alignés, mais un film d'huile est présent du fait de l'écoulement E₁ et, dans tous les cas, de l'huile sous pression forme un coussin entre la surface externe du rouleau 27 et le fond 12a de l'espace 12. Un écoulement d'huile E₃ peut avoir lieu à travers un orifice 28 incliné par rapport au canal 6 correspondant car l'huile a tendance à migrer vers l'extérieur de la denture 10 sous l'effet des forces centrifuges.

Les chocs entre la denture 10 et la chaîne 20 sont amortis par le coussin d'huile, ce qui limite l'usure du pignon d'une part et de la chaîne d'autre part et diminue le bruit de fonctionnement d'un système de distribution ou de synchronisation incorporant un tel pignon. En outre, l'effet de succion qui se produit classiquement en fond de denture sur les pignons connus est supprimé, car les fonds de denture sont alimentés en huile sous pression grâce aux canaux 6.

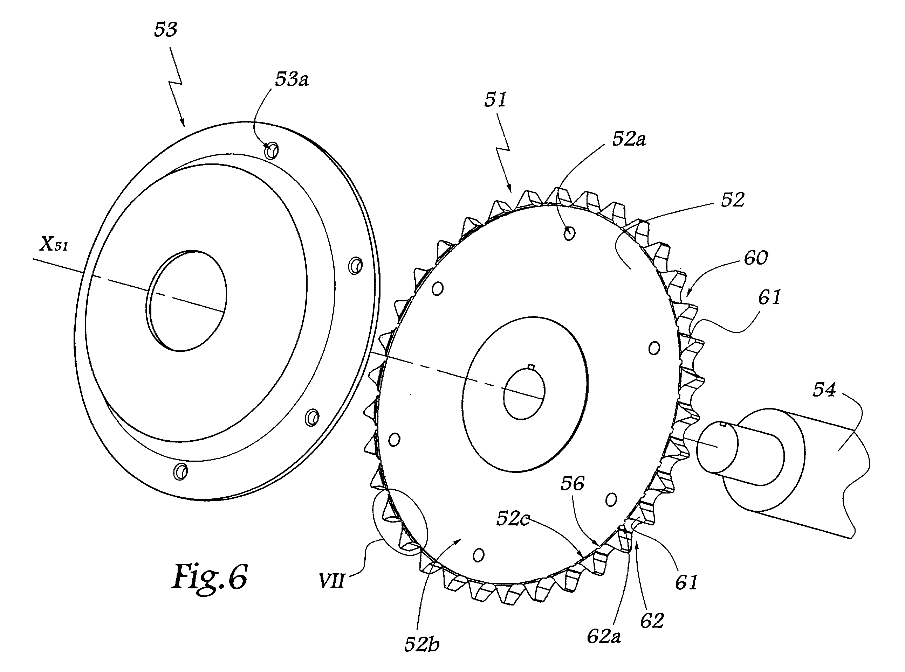

Comme il ressort plus clairement de la figure 4, une tubulure 8, reliée à une source d'huile sous pression telle qu'une pompe 9, est orientée vers l'intérieur de la cavité 7 de façon à la remplir en permanence. Le volume de la cavité 7 est sensiblement supérieur à la somme des volumes des canaux 6, de telle sorte que, même en cas d'arrêt de la pompe 9 et d'interruption de la projection d'huile à l'intérieur de la cavité 7, il reste dans cette cavité une quantité d'huile suffisante pour qu'une lubrification de la chaîne ait lieu pendant le mouvement de décélération du pignon 1.

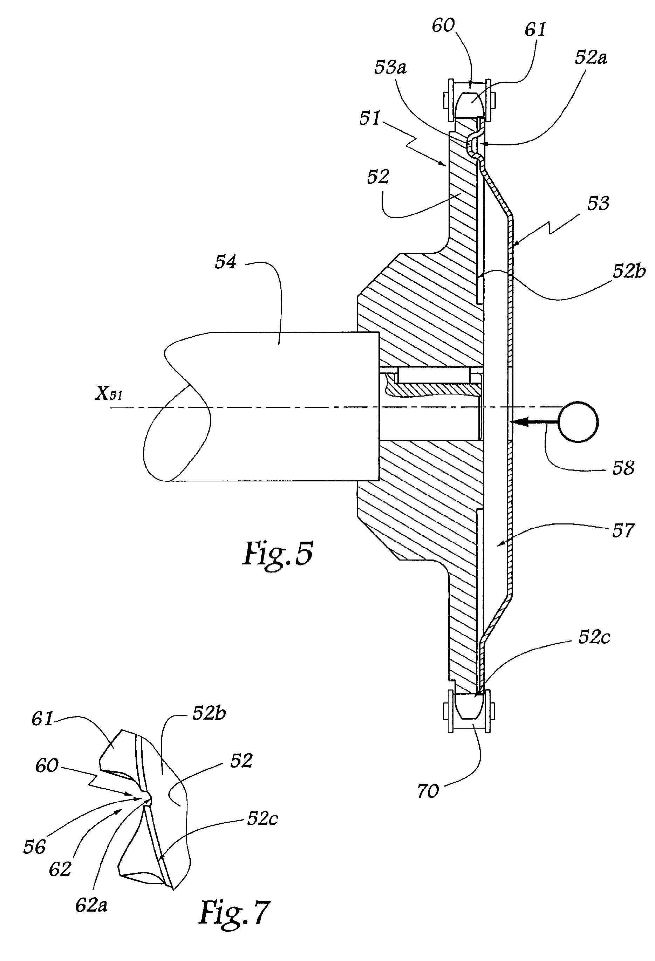

Dans le second mode de réalisation de l'invention représenté aux figures 5 à 7, les éléments analogues à ceux du premier mode de réalisation portent des références identiques augmentées de 50. Le pignon 51 de ce mode de réalisation comprend un corps principal 52 réalisé par usinage et une flasque ou corps secondaire 53 constitué par une tôle emboutie ou un voile moulé en métal ou une matière synthétique. La flasque 53 est montée sur le corps 52 par coincement grâce à des déformées 53a de la flasque 53 adaptées pour être reçues dans des logements correspondants 52a du corps 52. Comme précédemment, le pignon 51 est pourvu d'une denture 60 formée de dents 61 et d'espaces 62 dans lesquels sont reçus les éléments d'articulation d'une chaîne 70, analogue à la chaîne 20 du premier mode de réalisation.

Le corps principal 52 est accouplé à un arbre 54 permettant l'entraînement du pignon 51 autour d'un axe X₅₁ ou, dans le cas d'un pignon mené, sa rotation libre autour de cet axe. Le corps 52 définit une surface 52b, globalement plane et radiale, c'est-à-dire globalement perpendiculaire à son axe de rotation X₅₁. La surface 52b est bordée par une ceinture circonférientielle 52c qui constitue le côté interne des dents 61. La ceinture 52c est interrompue par des ouvertures 56 situées au niveau du fond 62a de chaque espace 62.

Lorsque la flasque 53 est montée sur le corps 52, les ouvertures 56 sont bordées par la surface 52b et par la face interne de la flasque 53, c'est-à-dire sa face tournée vers la surface 52b.

Comme il ressort plus clairement de la figure 5, une cavité 57 est formée entre le flasque 53 et la surface 52b, cette cavité ayant un volume relativement important, supérieur à celui des ouvertures 56, du fait du caractère gauche du flasque 53.

Par rapport au premier mode de réalisation, le pignon 51 présente l'avantage d'un usinage particulièrement simple du corps principal 52, les ouvertures 56 étant obtenues par l'intersection de la surface interne de la ceinture 52c et des surfaces définissant la forme des espaces 62, entre les dents 61.

La surface 52b constitue une surface de répartition de l'huile de lubrification grâce aux forces centrifuges générées par la rotation du piston. En d'autres termes, de l'huile dirigée vers la surface 52a par une tubulure 58 est répartie en direction des ouvertures 56 et, pour autant que le débit d'huile dans la tubulure 58 est suffisant, peut s'accumuler dans la cavité 57 qui constitue ainsi un réservoir d'alimentation des ouvertures 56 et des espaces 62 en lubrifiant.

En pratique, les ouvertures 56 sont des canaux de faible longueur et sont constituées par des rainures formées par fraisage de la ceinture 52c.

Comme dans le mode de réalisation précédent, un gavage des interstices existant entre des douilles, rouleaux et axes de la chaîne 70 peut être obtenu.

L'invention a été décrite avec une chaîne 20 ou 70 dont les rouleaux et douilles sont pourvus d'orifices de passage de l'huile de lubrification. Le pignon 1 ou 51 peut cependant être utilisé avec une chaîne classique, la lubrification étant obtenue entre les rouleaux de la chaîne et la denture ou, dans le cas d'une chaîne sans rouleaux, entre les douilles et la denture. L'huile, qui est sous pression du fait des forces centrifuges qu'elle subit, peut pénétrer entre les rouleaux et douilles ou entre les douilles et axes par les interstices ménagés au niveau des articulations de la chaîne. L'utilisation d'une chaîne à douilles et rouleaux percés dans le cadre d'un ensemble de transmission de puissance incorporant un tel pignon assure une optimisation de la lubrification grâce au gavage des articulation en huile, comme représenté par la flèche E₂ à la figure 2.

L'invention est applicable avec un pignon menant ou un pignon mené coopérant avec une chaîne, la fonction de distribution du fluide de lubrification étant obtenue par la rotation, motrice ou suiveuse, du pignon.

Selon une variante non représentée de l'invention, l'arbre d'entraînement 4 du pignon peut être situé du côté opposé du corps 2, auquel cas la tubulure d'alimentation en huile, 8 ou équivalente, est décalée pour ne pas interférer avec cet arbre.

## Revendications

1. Pignon (1) d'entraînement ou de renvoi de chaîne (20), notamment pour la transmission de puissance dans un moteur, comprenant une denture périphérique (10) apte à coopérer avec les maillons de ladite chaîne et au moins un canal ou une ouverture radial (6 ; 56) reliant une cavité (7 ; 57) dudit pignon formant répartiteur de fluide de lubrification avec une partie (12) de la denture au voisinage de ladite chaîne, caractérisé en ce qu'il comprend un corps principal (2 ; 52) solidaire d'un arbre central (4 ; 54) et un corps secondaire (3 ; 53) monté sur ledit corps principal, ledit ou lesdits canaux ou ouvertures (6 ; 56) étant formés entre lesdits corps.

2. Pignon selon la revendication 1, caractérisé en ce que ledit canal ou ladite ouverture (6 ; 56) débouche dans ladite denture au fond (12a ; 62a) d'un espace (12 ; 62) de réception d'une articulation (22, 25, 27) de ladite chaîne (20 ; 70).

3. Pignon selon la revendication 2, caractérisé en ce que le débouché (6a) dudit canal ou de ladite ouverture (6 ; 56) est apte à être disposé en regard d'un orifice (28, 29) de passage d'un lubrifiant ménagé dans un rouleau (27) ou une douille (25) de ladite chaîne (20).

4. Pignon selon l'une des revendications 2 ou 3, caractérisé en ce que le débouché (6a) dudit canal ou de ladite ouverture (6 ; 56) est prévu dans une partie centrale de la surface de portée (12a) de ladite chaîne (20) dans ladite denture (10).

5. Pignon selon l'une des revendications précédentes, caractérisé en ce que ledit corps principal (2 ; 52) est pourvu de rainures radiales formant lesdits canaux ou ouvertures (6 ; 56), lesdites rainures étant coiffées par ledit corps secondaire.

6. Pignon selon la revendication 5, caractérisé en ce que ledit corps principal (52) forme une surface radiale (52b) de répartition de fluide de lubrification, ladite surface étant bordée par une ceinture circonférentielle (52c) formant une partie de ladite denture (60), ladite ceinture étant interrompue par lesdites rainures (56) au niveau du fond (62a) de certaines au moins des espaces (62) de réception d'une articulation de ladite chaîne (70).

7. Pignon selon l'une des revendications précédentes, caractérisé en ce que ladite cavité (7 ; 57) formant répartiteur est définie entre lesdits corps principal (2 ; 52) et secondaire (3 ; 53).

8. Pignon selon l'une des revendications précédentes, caractérisé en ce que ladite cavité (7 ; 57) formant répartiteur a un volume interne sensiblement supérieur à celui dudit canal ou desdits canaux (6 ; 56).

9. Ensemble de transmission de puissance, notamment pour moteur, caractérisé en ce qu'il comprend un pignon (1 ; 51) selon l'une des revendications précédentes et une chaîne (20 ; 70) dont les maillons (21 ; 22) sont articulés au moyen d'axes (22) entourés par des douilles (25) elles-mêmes entourées de rouleaux (27), lesdites douilles et lesdits rouleaux étant pourvus chacun d'au moins un orifice radial (28, 29) de passage de fluide de lubrification, lesdits orifices étant aptes à être orientés vers le débouché (6a ; 56) desdits canaux ou ouvertures (6 ; 56) lorsque lesdits douilles et rouleaux sont en place sur ledit pignon.

10. Ensemble selon la revendication 9, caractérisé en ce que lesdits orifices radiaux (28, 29) d'une douille (26) et d'un rouleau (17) coaxiaux autour d'un axe (22) d'articulation de maillons (21, 22) de ladite chaîne sont aptes à être alignés en même temps (figure 2) selon une direction essentiellement radiale dudit pignon, les orifices étant tournés vers un axe central (X₁ ; X₅₁) dudit pignon (1 ; 51).

11. Moteur, notamment à combustion interne, équipé d'un pignon (1 ; 51) selon l'une des revendications 1 à 8 ou un ensemble selon l'une des revendications 9 ou 10.
